# EUROPÄISCHE PATENTSCHRIFT

(11) **EP 0 440 117 B1**
(45) Veröffentlichungstag und Bekanntmachung des Hinweises auf die Patenterteilung: **25.08.1993**
(21) Anmeldenummer: 91101018.9
(22) Anmeldetag: 26.01.1991
(51) Int. Cl.: B05D 3/06, B65H 45/30, B31F 5/04, B05C 9/12, C09J 5/00, B32B 31/00

(54) **Verfahren und Vorrichtung zum Verbinden von Materialbahnen**
Method and apparatus for joining webs
Appareils et procédé de raccordement de bandes

(30) Priorität: 31.01.1990 DE 4002778; 07.02.1990 DE 4003577
(43) Veröffentlichungstag der Anmeldung: 07.08.1991
(73) Patentinhaber: GRAFOTEC KOTTERER GMBH, D-86420 Diedorf (DE)
(72) Erfinder: Kotterer, Werner J., W-8901 Diedorf (DE); Senft, Reinhold, W-8901 Diedorf (DE)
(74) Vertreter: Munk, Ludwig, Dipl.-Ing.

(56) Entgegenhaltungen:
- WO-A-87/05237
- DE-A- 3 207 620
- GB-A- 470 983
- GB-A- 2 180 408

## Beschreibung

Die Erfindung betrifft gemäß einem ersten Erfindungsgedanken ein Verfahren zum Verbinden von wenigstens zwei während des Laufs zusammengeführten Materialbahnen, insbesondere von in einen Falzapparat einlaufenden Bahnsträngen aus Papier, entlang von quer zur Bahnlaufrichtung verlaufenden, voneinander distanzierten Verbindungslinien, die durch auf wenigstens eine der Materialbahnen aufgetragenen Leim gebildet werden, und geht gemäß einem weiteren Erfindungsgedanken auf eine Vorrichtung zur Durchführung dieses Verfahrens mit wenigstens einer eine zugeordnete Materialbahn überquerend angeordneten Leimauftragseinrichtung, die einer Bahnzusammenführungseinrichtung vorgeordnet ist.

Ein Verfahren und eine Vorrichtung dieser Art sind aus der DE-PS 32 07 620 entnehmbar. Hierbei findet ein mit der einen von zwei Bahnen zusammenwirkender, von der anderen Bahn umfahrener Leimauftragzylinder Verwendung, der mit einem vom Zylinderinnenraum mit Leim beaufschlagbaren Leimaustrittsschlitz versehen ist und mit einer eine radial vorspringende Andrückleiste aufweisenden Gegenwalze zusammenwirkt. Anordnungen dieser Art verursachen ersichtlich einen sehr großen baulichen Aufwand und Platzbedarf. Besonders ungünstig ist in diesem Zusammenhang, daß hier versucht wird, den Leim ganz genau an der gewünschten Stelle als strichförmigen, quer zur Bahnlaufrichtung verlaufenden Streifen aufzutragen. Anordnungen dieser Art erweisen sich daher zum Verbinden von mehr als zwei Bahnsträngen schon aufgrund des Aufwands und Platzbedarfs als wenig gefragt. Ein nachträglicher Einbau von Anordnungen der aus der DE-PS 32 07 620 entnehmbaren Art ist äußerst schwierig . Außerdem besteht hier auch eine nicht unbeträchtliche Gefahr der Verschmutzung des Leimauftragzylinders, was notwendigerweise zu Betriebsunterbrechungen zum Säubern des Leimauftragzylinders und dementsprechend zu unerwünschten Stillstandszeiten führt. Die bekannte Vorrichtung und das bekannte Verfahren erweisen sich dementsprechend als nicht einfach und betriebssicher genug.

Hiervon ausgehend ist es daher die Aufgabe der vorliegenden Erfindung, diese Nachteile auf einfache und kostengünstige Weise zu vermeiden und ein Verfahren und eine Vorrichtung zu schaffen, die trotz Verwendung einfachster Mittel eine hohe Genauigkeit und Wirtschaftlichkeit gewährleisten.

Ausgehend vom eingangs erwähnten Verfahren wird diese Aufgabe dadurch gelöst, daß ein Leim Verwendung findet, der im aufgetragenen Zustand von einer passiven, nicht klebenden Form in eine aktive, klebende Form überführbar ist, und daß jede, einen Leimauftrag erhaltende Materialbahn zunächst zumindest im Bereich von die Verbindungslinien enthaltenden Auftragsfeldern mit Leim beaufschlagt wird, der anschließend nur entlang der Verbindungslinien aktiviert wird, bevor die Materialbahnen zusammengeführt werden.

Mit diesen Maßnahmen wird ein Verfahren geschaffen, das es in vorteilhafter Weise gestattet, den Leim feldförmig, d.h. auf einer größeren Länge als benötigt, aufzutragen und dennoch lediglich linienförmige Klebverbindungen zwischen den miteinander zu verbindenden Bahnen zu erreichen. Diese Maßnahmen stellen daher in vorteilhafter Weise sicher, daß es beim Leimauftrag auf übertriebene Genauigkeit nicht ankommt, was sich vorteilhaft auf den erzielbaren Aufwand und die Betriebssicherheit auswirkt. In vorteilhafter Weise ist es hierbei möglich, die betreffenden Bahnen in Bahnlängsrichtung zu beleimen, so daß stationäre Leimauftragselemente Verwendung finden können. Die erfindungsgemäßen Maßnahmen ermöglichen daher in vorteilhafter Weise auch eine einfache, berührungslose Leimauftragung. Dasselbe gilt für die Aktivierung des passiven bzw. passivierten Leims. Auch diese kann ohne weiteres berührungslos erfolgen. Die erfindungsgemäßen Maßnahmen ermöglichen daher in vorteilhafter Weise auch eine höchst schonende und verschmutzungssichere Betriebsweise.

Vorteilhafte Weiterbildungen der übergeordneten Lösung sind in den Unteransprüchen angegeben. Eine erste vorteilhafte Ausgestaltung kann darin bestehen, daß ein im auftragungsfähigen Zustand passiver, nicht klebender Leim Verwendung findet, der nachträglich aktivierbar ist. Im Falle einer Trocknung und/oder Kühlung der Materialbahn kann der Leim dabei nach der Trocknung und/oder Kühlung aufgetragen und unmittelbar darauf aktiviert werden. Hierdurch ist es möglich, einen durch Energiezufuhr aktivierbaren Leim zu verwenden, ohne daß es in einem von der Materialbahn durchlaufenen Trockner zu einer Leimaktivierung und im Bereich von dem Trockner nachgeordneten Kühlwalzen zu einer Verschmutzung der Kühlwalzen mit Leim kommen kann. Vielmehr ist es möglich, den Leim erst dann auf die Materialbahn aufzutragen, wenn diese den Trockner und die diesem nachgeordneten Kühlwalzen bereits durchlaufen hat und daher bis zur Bahnzusammenführung nur noch mit ihren leimfreien Seite über Bahnführungselemente läuft. Zudem gewährleisten die obengenannten Maßnahmen, die Leimauftragseinrichtung und die Leimaktivierungseinrichtung mit geringem Abstand nebeneinander anzuordnen bzw. zu einer Baueinheit zusammenzufassen, was eine besonders kompakte und platzsparende Anordnung ergibt.

Eine weitere zweckmäßige Maßnahme kann darin bestehen, daß der durch Energiezufuhr aktivierbare Leim ein lichtaktivierbarer Leim ist, der durch einen aus einem über die Materialbahn sich erstreckenden Schlitz austretenden Lichtstrahl, vorzugsweise in Form eines Laserstrahls, aktiviert wird. Diese Maßnahmen ermöglichen auch bei sehr großen Produktionsgeschwindigkeiten eine hohe Genauigkeit. Außerdem ergibt sich aufgrund der Verwendung von Licht als Aktivierungsmedium ein sehr sauberer und trockener Betrieb.

In weiterer Fortbildung der übergeordneten Maßnahmen kann der Leim in Form von in Bahnlaufrichtung verlaufenden, seitlich voneinander beabstandeten, strichförmigen Leimstreifen aufgetragen, vorzugsweise in Form gebündelter Strahlen aufgespritzt werden. Zur Erzielung punktförmiger Klebestellen kann dabei der Leim jeweils entlang einer die in Bahnlaufrichtung verlaufenden Leimstreifen schneidenden, quer zur Bahnlaufrichtung verlaufenden Verbindungslinie aktiviert werden. Die ermöglicht in vorteilhafter Weise den Einsatz einfacher und robuster und dennoch vergleichsweise leicht steuerbarer Auftragsorgane. Ein besonderer Vorteil ist dabei darin zu sehen, daß diese Auftragsorgane berührungsfrei arbeiten können.

Ausgehend von der eingangs erwähnten, gattungsgemäßen Vorrichtung wird die obengenannte Aufgabe erfindungsgemäß dadurch gelöst, daß der Leimauftragseinrichtung eine die Materialbahn überquerend angeordnete Leimaktivierungseinrichtung nachgeordnet ist, mittels welcher die Materialbahn entlang einer im Vergleich zur in Bahnlaufrichtung gesehenen Länge des Leimauftrags schmalen, quer zur Bahnlaufrichtung verlaufenden Beaufschlagungslinie mit einem Aktivierungsmittel beaufschlagbar ist.

Diese Maßnahmen ergeben einen höchst einfachen, platzsparenden und damit insgesamt kostengünstigen Aufbau. Da die Aktivierungseinrichtung in der Regel nur ganz wenig Platz benötigt, ist es in vorteilhafter Weise ohne weiteres möglich, im Bereich eines Falzapparateinlaufs mehrere, den einlaufenden Strängen zugeordnete Aktivierungseinrichtungen vorzusehen. Diese erstrecken sich jeweils lediglich über die Breite der Stränge, die durch Aufteilung einer Papierbahn gebildet werden können, über deren ganze Breite sich die Leimauftragseinrichtung erstreckt. Diese wird pro Bahn daher lediglich einmal benötigt. Aufgrund dieser Maßnahmen ist in vorteilhafter Weise auch ein nachträglicher Einbau der erfindungsgemäßen Vorrichtung in eine Bahnverarbeitungsmaschine, beispielsweise in die Produktionsstraße zur Herstellung von gefalzten Druckprodukten, ohne weiteres möglich.

In vorteilhafter Weiterbildung der übergeordneten Maßnahmen kann die Leimauftragseinrichtung und die dieser nachgeordnete, vorzugsweise mit dieser zu einer Baueinheit zusammengefaßte Leimaktivierungseinrichtung in dem der Bahnzusammenführungseinrichtung unmittelbar vorgeordneten Bereich der Bahnführung die Bahn auf der von den Bahnführungselementen der Bahnzusammenführungseinrichtung abgewandten Seite übergreifend angeordnet sein. Diese Maßnahmen ergeben eine besonders kompakte, platzsparende Baueinheit aus Leimauftragseinrichtung und Leimaktivierungseinrichtung. Gleichzeitig ist sichergestellt, daß die den Leimauftrag erhaltende Seite der Materialbahn vor der Bahnzusammenführung mit keinem Bahnführungselement mehr in Verbindung kommt, womit einer Verschmutzung der Bahn wirksam vorgebeugt ist.

Weitere vorteilhafte Ausgestaltungen und zweckmäßige Fortbildungen der übergeordneten Maßnahmen ergeben sich aus der nachstehenden Beschreibung einiger Ausführungsbeispiele anhand der Zeichnung in Verbindung mit den restlichen Unteransprüchen.

In der nachstehend beschriebenen Zeichnung zeigen:
- Figur 1: eine Draufsicht auf eine erfindungsgemäße Vorrichtung zum Verbinden von zwei Materialbahnen,
- Figur 2: eine Seitenansicht eines Falzapparateinlaufs,
- Figur 3: ein Beispiel für eine mechanische Leimauftragseinrichtung,
- Figur 4: eine Seitenansicht der Aktivierungseinrichtung für lichtaktivierbaren Leim,
- Figur 5: ein Beispiel für die Aktivierungseinrichtung für einen wasseraktivierbaren Leim in Figur 4 entsprechender Darstellung und
- Figur 6: ein weiteres Ausführungsbeispiel zur Verarbeitung von in passivem Zustand auftragbarem Leim in Figur 1 entsprechender Darstellung.

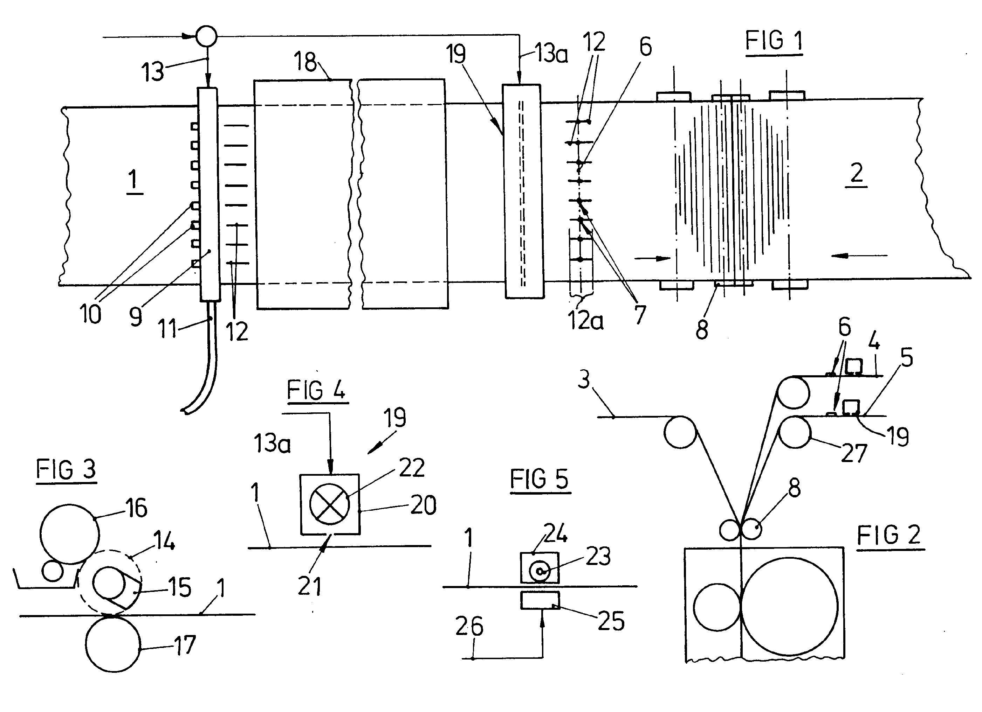

Bei der Herstellung mehrseitiger Falzprodukte werden zwei oder mehr Materialstränge zu einem Paket aufeinandergelegt, von dem bogenförmige Produkte abgetrennt werden, die anschließend einen Querfalz erhalten. Bei den dem Falzapparat zugeführten Materialsträngen kann es sich, wie Figur 1 zeigt, um ununterteilte, aus unterschiedlichen Produktionen zusammengeführte Materialbahnen 1, 2 oder, wie Figur 2 zeigt, um durch Auftrennen einer Bahn gebildete, aufeinandergelegte, schmalere Stränge 3, 4, 5 handeln. Um im Bereich des Querfalzes eine dauerhafte Verbindung der aufeinanderliegenden Bogen zu gewährleisten, wird bereits das dem Falzapparat zugeführte Bahnmaterial an der Stelle, an der später der Querfalz zu erwarten ist, mit einer durch einen Leimauftrag gebildeten, quer zur Bahnlaufrichtung verlaufenden Verbindungslinie 6 versehen. Diese wird hier durch mehrere, entlang einer quer zur Bahnlaufrichtung verlaufenden, über die ganze Bahnbreite sich erstreckenden Linie angeordnete, voneinander beabstandete Leimpunkte 7 gebildet. Einen derartigen Leimauftrag erhalten alle Lagen eines Pakets mit Ausnahme einer Decklage wie in Figuren 1 und 2 bei 2 bzw. 3 angedeutet ist. Zum Zusammenpressen der aufeinanderliegenden Lagen eines Pakets durchläuft dieses einen durch zwei Preßwalzen 8 gebildeten Spalt. Hierbei werden die aufeinanderliegenden Lagen entlang der Leimpunkte 7 fest miteinander verbunden.

Zum Auftragen von Leim auf die jeweils eine Beleimung erhaltenden Lagen kann, wie Figur 1 zeigt, ein hier der Bahn 1 zugeordneter, über die ganze Bahnbreite durchgehender Düsenbalken 9 vorgesehen sein, der mit in Reihe nebeneinander angeordneten, seitlich voneinander distanzierten Spritzdüsen 10 versehen ist und der durch eine Versorgungsleitung 11 mit Leim beaufschlagbar ist. Hierbei soll es sich um dünnflüssigen Leim mit einer wasserähnlichen Viskosität handeln, der mit Hilfe der Spritzdüsen 10 unter Verwendung von Niederdruck in Form linienförmiger Strahlen auf die zugeordnete Bahn 1 aufgebracht werden kann. Ein Dispersionsleim mit einem Festkörperanteil von etwa 50% bis 60%, einer Oberflächenspannung von etwa 30 mN/m² und einer im DIN 4mm-Becher gemessenen Viskosität von 15sec. bis 2osec. ist hierfür gut geeignet. Bei Verwendung eines derartigen Leims genügen ein Niederdruck von etwa 1,5bar und eine Düsenweite der Spritzdüsen 10 von etwa 0,5mm, um wenigstreuende, linienförmige Auftraglinien 12 zu erreichen, wie sie im Bereich der Bahn 1 angedeutet sind. Diese Auftraglinien 12 verlaufen, wie Figur 1 zeigt, in Bahnlängsrichtung. Da die Spritzdüsen 10 ohne direkte Bahnberührung arbeiten, besteht auch keine Gefahr, daß die Bahnoberfläche infolge des Leimauftrags beschädigt würde. Ein Dispersionsleim genannter Art ist beim Auftragen aktiv und muß anschließend passiviert werden.

Die Spritzdüsen 10 können im Durchlaufbetrieb arbeiten. In diesen Fällen würden nicht unterbrochene, in Bahnlängsrichtung verlaufende Auftraglinien erzeugt. Im dargestellten Ausführungsbeispiel sollen die Spritzdüsen 10, wie durch eine Steuerleitung 13 angedeutet ist, durch eine geeignete Unterbrechereinrichtung in Abhängigkeit vom gewünschten Format der herzustellenden Druckprodukte so auf- und abgesteuert werden, daß sich in den Bereichen, an denen später der Querfalz erfolgt, Auftraglinien 12 von einigen Zentimetern Länge ergeben. Diese sind dabei bezüglich der zu erwartenden Falzlinie möglichst mittig angeordnet. Es ergibt sich daher ein die Verbindungslinie 6 enthaltendes Auftragfeld 12a.

Bei der der Figur 3 zugrundeliegenden Leimauftragseinrichtung wird der Leimauftrag nicht aufgespritzt, sondern durch Abwälzbewegung aufgetragen. Hierzu ist eine Auftragwalze 14 mit einer radial vorspringenden Auftragleiste 15 vorgesehen, die durch ein Versorgungssystem 16, hier in Form einer mit einer Tauchwalze zusammenwirkenden Filmwalze, mit Leim versorgt wird. Der Auftragwalze 14 gegenüberliegend ist eine beim Durchgang der Auftragleiste 15 eine zuverlässige Abstützung gewährleistende Gegenwalze 17 vorgesehen. Die Auftragleiste 15 kann sich ununterbrochen über die ganze über die Bahnbreite durchgehende Walzenlänge erstrecken. Es wäre aber auch denkbar, zur Erzielung schmaler, strichförmiger Leimaufträge die Auftragwalze 15 mit Unterbrechungen zu versehen, beispielsweise mit Nuten, durch die schmale Stege voneinander getrennt werden.

Der mit Hilfe der Leimauftrageinrichtung in Form des Düsenbalkens 9 bzw. der Auftragwalze 14 auf die Bahn 1 aufgebrachte, in Bahnlängsrichtung zumindest über die Länge eines Auftragfelds von mehreren Zentimetern sich erstreckende Leimafutrag wird, wie schon erwähnt, zunächst passiviert, was hier durch Trocknen geschehen kann. Der Düsenbalken 9 ist daher hier einem Trockner 18 vorgeordnet, den die den Leimauftrag enthaltende Bahn 1 durchläuft. Der Verwendete Dispersionleim führt dabei zu einer praktisch unsichtbaren Schicht auf der Bahnoberfläche. Zum Bedrucken einer Papierbahn Verwendung findenden Rollenrotationsdruckmaschinen ist in der Regel ein Trockner nachgeordnet. Da die Bahn 1 eine frisch bedruckte Papierbahn sein soll, kann es sich beim Trockner 18 um den der Rollenrotationsdruckmaschine nachgeordneten Trockner handeln. Die Leimauftragseinrichtung in Form des Düsenbalkens 10 bzw. der Auftragwalze 14 kann dabei einfach im Bereich des Trocknereinlaufs angeordnet sein.

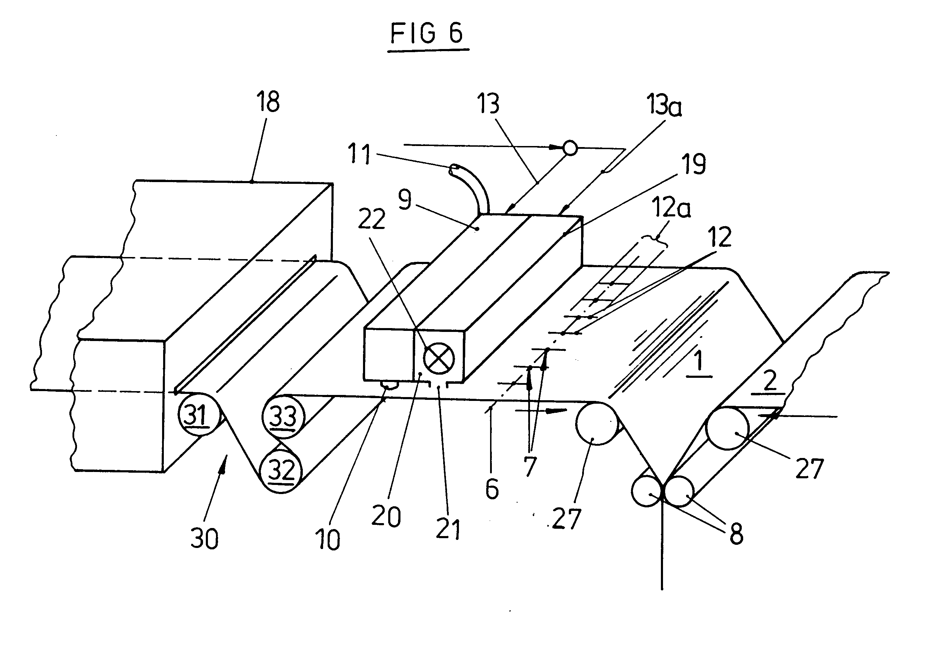

Der hier durch Trocknung zunächst passivierte Leim wird vor dem Einlauf der Bahnen 1, 2 in den durch die Preßwalzen 8 gebildeten Walzenspalt jeweils entlang von quer zur Bahnlaufrichtung sich erstreckenden, gegenüber der Länge der Auftraglinien 12 äußerst schmalen, in Figur 1 durch die Leimpunkte 7 gebildeten Verbindungslinien wieder aktiviert. Hierzu ist im Anschluß an den Trockner 18 eine Leimaktivierungseinrichtung 19 vorgesehen. Diese besteht im Falle der Verwendung von durch Licht wieder aktivierbarem Leim, wie Figur 4 zeigt, aus einem die Bahn 1 überquerend angeordneten, hier oberhalb der Bahn 1 mit geringem Bahnabstand vorgesehenen, kastenförmigen Gehäuse 20, das bahnseitig mit einem schmalen, durchgehenden Schlitz 21 versehen ist und in seinem Inneren eine Lichtquelle 22 aufnimmt. Die Lichtquelle 22 ist als durch eine Laserdiode gebildete Blitzeinrichtung ausgebildet, die mittels der Signalleitung 13a im Takt des Formats der herzustellenden Falzprodukte momentartig aktivierbar ist. Diese Aktivierung kann durch dasselbe Eingangssignal ausgelöst werden wie die Aktivierung der Spritzdüsen 10, wie in Figur 1 angedeutet ist. Der Abstand der Leimaktivierungseinrichtung 19 vom Düsenbalken 9 entspricht dabei einem ganzen Vielfachen des gewünschten Formats. Sofern Abweichungen hiervon gegeben sind, läßt sich dies durch entsprechende Verzögerung ohne weiteres ausgleichen. Die mit Hilfe der Lichtquelle 22 erzeugbaren Lichtblitze treten in Form eines gebündelten, leistenförmigen Strahls aus dem Austrittsschlitz 21 aus. Die darunter vorbeilaufende Bahn 1 wird dementsprechend mit über die Bahnbreite durchgehenden, leistenförmigen Lichtstrahlen beaufschlagt. Diese schneiden die jeweils zugeordnete Reihe der in Bahnlängsrichtung verlaufenden Auftraglinien 12. An den Kreuzungspunkten wird der vorher getrocknete, lichtaktivierbare Leim durch das auftreffende Licht wieder aktiviert, was zu den oben bereits erwähnten Leimpunkten 7 führt. Selbstverständlich könnte anstelle der voneinander beabstandeten Auftraglinien auch ein über die Bahnbreite durchgehender Leimauftrag vorgesehen sein, der dann durch das linienförmig auftreffende Licht entlang einer durchgehenden Linie aktiviert würde. Es wäre auch denkbar, anstelle einer auf- und absteuerbaren Blitzeinrichtung eine permanent aktivierte Lichtquelle vorzusehen und dafür den Austrittsschlitz 21 mit einer auf- und zusteuerbaren Blende zu versehen.

Bei der Verwendung von durch Wasser oder eine ähnliche Flüssigkeit wieder aktivierbarem Leim wird ein dünner Flüssigkeitsstrahl erzeugt, der die Bahn mit geringem Abstand überquert und an der gewünschten Stelle zur Bahn hin ausgelenkt wird. Die hierzu vorgesehene Vorrichtung enthält, wie Figur 5 zeigt, eine mit Wasser oder einer ähnlichen Flüssigkeit beaufschlagbare Spritzdüse 23, die so angeordnet ist, daß ihre Achse die zugeordnete Bahn 1 mit Abstand überquert. Die Spritzdüse 23 befindet sich im Bereich einer seitlichen Bahnkante. Im Bereich der gegenüberliegenden Bahnkante kann eine mit einer Drainage versehene Auffangeinrichtung 24 zum Auffangen des die Bahn 1 mit geringem Abstand überquerenden Flüssigkeitsstrahls vorgesehen sein. Die Spritzdüse 23 ist im dargestellten Ausführungsbeispiel oberhalb der Bahn 1 vorgesehen. Auf der gegenüberliegenden Seite, also unterhalb der Bahn 1, ist hier eine über die ganze Bahnbreite sich erstreckende Auslenkeinrichtung 25 vorgesehen, die mittels einer zugeordneten Signalleitung 26 momentartig aktivierbar ist. Da ein Flüssigkeitsstrahl auf einfache Weise mit Hilfe eines Magnetfelds abgelenkt werden kann, kann die Auslenkeinrichtung 25 einfach als Elektromagnetanordnung ausgebildet sein, die durch im Takt des Formats der herzustellenden Falzprodukte auf- bzw. absteuerbare Stromzufuhr aktivierbar bzw. passivierbar ist. Die Spritzdüse 23 benötigt in diesem Fall keine Steuerung, sondern kann permanent mit Druckflüssigkeit beaufschlagt werden, so daß sich ein durchgehender, die Bahn 1 überquerender Flüssigkeitsstrahl ergibt, der mit Hilfe der Auslenkeinrichtung 25 auf der ganzen Bahnbreite gleichmäßig an die Bahn 1 herangeholt werden kann. Die Neigung der Wurfkurve kann dabei durch eine gewisse Neigung der Achse der Spritzdüse 23 ausgeglichen werden. Außerdem wäre es denkbar, die Auslenkeinrichtung über der Bahnbreite in mehrere mit gegenseitiger Verzögerung aktivierbare Abschnitte zu unterteilen.

Zur Verbesserung der Wirkung kann das Wasser polarisiert werden. Hierzu wird das Wasser einfach mittels eines der Spritzdüse 23 vorgeordneten Aufladegeräts vorzugsweise negativ aufgeladen. Die Auslenkeinrichtung kann dann aus einer gegenüberliegend angeordneten, gegenpoligen oder einer auf derselben Seite wie die Spritzeinrichtung angeordneten, gleichpoligen Elektromagnetanordnung bestehen. Der letztgenannten Anordnung, d.h. der Anordnung oberhalb der Papierbahn ist der Vorzug zu geben, da hierbei weniger Verschmutzungsgefahr besteht.

Bei einem Falzapparatüberbau der der Figur 2 zugrundeliegenden Art ist im Bereich der Führung jedes Strangs mit Ausnahme eines Deckstrangs eine über die Strangbreite sich erstreckende Leimaktivierungseinrichtung 19 vorgesehen. Diese befindet sich zweckmäßig seitlich neben den Einlaufwalzen 27. Der Leimauftrag erfolgt hierbei auf die noch nicht unterteilte Bahn. Pro Bahn wird daher lediglich eine Leimauftrageinrichtung benötigt, die über die ganze Bahnbreite durchgeht, in dem dem Deckstrang 3 zugeordneten Bereich jedoch passiviert sein kann, was im Falle der Verwendung von Spritzdüsen einfach durch Demontage bzw. Absperren der betreffenden Spritzdüsen 10 erfolgen kann.

Bei der der Figur 6 zugrundeliegenden Ausführung wird im Gegensatz zu oben bereits in passiver Form auftragbarer Leim verarbeitet, der nachträglich nur noch aktiviert werden muß. Im übrigen entspricht der Aufbau der Figur 6 den oben beschriebenen Beispielen. Für gleiche Teile finden daher gleiche Bezugszeichen Verwendung.

Bei den Materialbahnen 1, 2 soll es sich wieder um frisch bedruckte Papierbahnen handeln, die jeweils in an sich bekannter Weise nach Verlassen der hier nicht näher dargestellten Rollenrotationsdruckmaschine einen Trockner 18 und anschließend eine Kühleinrichtung 30 mit drei in Form einer U-förmigen Schleife umfahrenen Kühlwalzen 31, 32, 33 durchlaufen.

Die zum Auftragen von Leim auf die eine Papierbahn, hier die Bahn 1, vorgesehene Leimauftragseinrichtung 9 ist im Bereich zwischen Kühleinrichtung 30 und Bahnzusammenführungseinrichtung oberhalb der Bahn 1 diese überquerend angeordnet. Diese kann wie oben geschildert ausgebildet sein. Hierzu ist die Leimauftragseinrichtung 9 mit seitlich voneinander distanzierten, die Bahn 1 nicht berührenden Spritzdüsen 10 versehen, mit Hilfe derer gebündelte, dünne Leimstrahlen auf die Bahn 1 aufgespritzt werden können, die auf dieser zu in Bahnlaufrichtung verlaufenden, seitlich voneinander distanzierten Auftraglinien 12 führen.

Neben der dem Trockner 18 und der Kühleinrichtung 30 nachgeordneten Leimauftragseinrichtung 9 ist die hier mit der Leimauftragseinrichtung 9 zu einer Baueinheit zusammengefaßte Leimaktivierungseinrichtung 19 vorgesehen, mittels welcher der zuvor mit Hilfe der Auftragseinrichtung 9 aufgebracht, passive Leim an den Schnittpunkten der Auftraglinien 12 mit der Verbindungslinie 6 aktiviert wird. Es ergeben sich dementsprechend die entlang der Verbindungslinie 6 aufgereihten, seitlich gegeneinander distanzierten, aktiven Leimpunkte 7, durch die die Bahnen 1, 2 beim Durchlauf durch die Preßwalzen 8 miteinander verklebt werden. Die der Leimauftragseinrichtung 9 nachgeordnete, hier mit dieser zusammengebaute Aktivierungseinrichtung 19 ist ebenfalls taktweise ein- und ausschaltbar, was durch eine Steuerleitung 13a angedeutet ist. Hierzu kann dasselbe Eingangssignal wie zur Steuerung der Spritzdüsen 10 Verwendung finden. Der nichtaktivierte Leim außerhalb der Leimpunkte 7 wird vom Papier aufgesaugt und damit unschädlich gemacht. Dasselbe gilt oben. Der Aufbau der Aktivierungseinrichtung 19 kann ebenfalls wie oben beschrieben ausgebildet sein.

Die Leimauftragseinrichtung 9 und Aktivierungseinrichtung 19 befinden sich stromabwärts von der letzten, mit der ihnen zugewandten Seite der Bahn 1 in Kontakt kommenden Walze, das ist hier die mittlere Kühlwalze 32. Im dargestellten Ausführungsbeispiel sind die Leimauftragseinrichtung 9 und Aktivierungseinrichtung 19 der Kühleinrichtung 30 nachgeordnet und der Bahnzusammenführungseinrichtung vorgeordnet. Die Leimauftragseinrichtung 9 und Aktivierungseinrichtung 19 befinden sich dementsprechend im Bereich zwischen der auslaufseitigen Kühlwalze 33 der Kühleinrichtung 30 und der einlaufseitigen Umlenkwalze 27 der Bahnzusammenführungseinrichtung.

## Patentansprüche

1. Verfahren zum Verbinden von wenigstens zwei während des Laufs zusammengeführten Materialbahnen (1,2), insbesondere, von in einen Falzapparat einlaufenden Bahnsträngen aus Papier, entlang von quer zur Bahnlaufrichtung verlaufenden, voneinander distanzierten Verbindungslinien (6), die durch auf wenigstens eine der Materialbahnen aufgetragenen Leim gebildet werden, **dadurch gekennzeichnet, daß** ein Leim Verwendung findet, der im aufgetragenen Zustand von einer passiven, nichtklebenden Form in eine aktive, klebende Form überführbar ist und daß jede, einen Leimauftrag erhaltende Materialbahn (1) zunächst zumindest im Bereich von die Verbindungslinien (6) enthaltenden Auftragsfeldern (12a) mit Leim beaufschlagt wird, der anschließend nur entlang der Verbindungslinien (6) aktiviert wird, bevor die Materialbahnen (1, 2) zusammengeführt werden.

2. Verfahren nach Anspruch 1, **dadurch gekennzeichnet, daß** ein im auftragungsfähigen Zustand passiver, nicht klebender Leim Verwendung findet, der nachträglich aktivierbar ist.

3. Verfahren nach Anspruch 2, **dadurch gekennzeichnet, daß** der Leim im Falle einer Trocknung und/oder Kühlung der Materialbahn (1) nach der Trocknung und/oder Kühlung aufgetragen und unmittelbar darauf aktiviert wird.

4. Verfahren nach Anspruch 1, **dadurch gekennzeichnet, daß** ein im auftragungsfähigen Zustand aktiver Leim Verwendung findet, der nach dem Auftrag passiviert wird und nach erfolgter Passivierung wieder aktiviert wird.

5. Verfahren nach Anspruch 4, **dadurch gekennzeichnet, daß** ein durch Trocknung passivierbarer Leim Verwendung findet, der vor dem Einlauf der zugeordneten Materialbahn (1) in einen Trockner (18) aufgetragen und nach dem Auslauf der Materialbahn (1) aus dem Trockner (18) teilweise wieder aktiviert wird.

6. Verfahren nach einem der vorhergehenden Ansprüche, **dadurch gekennzeichnet, daß** ein durch Energiezufuhr aktivierbarer, vorzugsweise ein durch Licht aktivierbarer Leim Verwendung findet, der vorzugsweise durch einen aus einem über die Materialbahn (1) sich erstreckenden Schlitz (21) austretenden Lichtstrahl, vorzugsweise in Form eines Laserstrahls, aktiviert wird.

7. Verfahren nach einem der vorhergehenden Ansprüche 1 bis 5, **dadurch gekennzeichnet, daß** ein durch eine Flüssigkeit aktivierbarer Leim Verwendung findet, der mittels eines die Materialbahn (1) mit Abstand überquerenden, vorzugsweise polarisierten Flüssigkeitsstrahls, der vorzugsweise auf elektromagnetische Weise zur Materialbahn (1) ausgelenkt wird, aktiviert wird.

8. Verfahren nach einem der vorhergehenden Ansprüche, **dadurch gekennzeichnet, daß** der Leim in Form von in Bahnlaufrichtung verlaufenden, seitlich voneinander beabstandeten, strichförmigen Leimstreifen (12) aufgetragen, vorzugsweise in Form gebündelter Strahlen aufgespritzt wird, und daß der Leim jeweils entlang einer die in Bahnlaufrichtung verlaufenden Leimstreifen (12) schneidenden, quer zur Bahnlaufrichtung verlaufenden Verbindungslinie (6) aktiviert wird.

9. Vorrichtung zur Durchführung des Verfahrens nach wenigstens einem der vorhergehenden Ansprüche mit wenigstens einer eine zugeordnete Materialbahn (1) überquerend angeordneten Leimauftragseinrichtung (9 bzw. 14), die einer Bahnzusammenführungseinrichtung (8) vorgeordnet ist, **dadurch gekennzeichnet, daß** der Leimauftragseinrichtung (9, 14) eine die Materialbahn (1) überquerend angeordnete Leimaktivierungseinrichtung (19) nachgeordnet ist, mittels welcher die Materialbahn (1) entlang einer im Vergleich zur in Bahnlaufrichtung gesehenen Länge des Leimauftrags schmalen, quer zur Bahnlaufrichtung verlaufenden Beaufschlagungslinie (6) mit einem Aktivierungsmittel beaufschlagbar ist.

10. Vorrichtung nach Anspruch 9, **dadurch gekennzeichnet, daß** bei Verwendung eines im auftragungsfähigen Zustand passiven Leims die Auftragseinrichtung (9, 14) und die dieser nachgeordnete, vorzugsweise mit dieser zu einer Baueinheit zusammengefaßte Leimaktivierungseinrichtung (19) in dem der Bahnzusammenführungseinrichtung (8, 27) unmittelbar vorgeordneten Bereich der Bahnführung die Bahn (1) auf der von den Bahnführungselementen der Bahnzusammenführungseinrichtung (8, 27) abgewandten Seite übergreifend angeordnet sind.

11. Vorrichtung nach Anspruch 9, **dadurch gekennzeichnet, daß** bei Verwendung eines im auftragungsfähigen Zustand aktiven Leims die Leimauftragseinrichtung (9, 14) einer Passivierungseinrichtung, vorzugsweise einem von der zugeordneten Materialbahn (1) durchlaufenen Trockner (18), vorgeordnet ist, der bzw. dem eine die Materialbahn (1) überquerend angeordnete Leimaktivierungseinrichtung (19) nachgeordnet ist.

12. Vorrichtung nach einem der vorhergehenden Ansprüche 9 bis 11, **dadurch gekennzeichnet, daß** bei Verwendung eines durch Licht aktivierbaren Leims die Leimaktivierungseinrichtung (19) ein eine Lichtquelle (22), in Form einer als Blitzeinrichtung fungierenden Laserdiode, enthaltendes, die Materialbahn (1) überquerend angeordnetes Gehäuse (20) aufweist, das im Bereich seiner der Materialbahn (1) zugewandten Seite einen über die Breite der Materialbahn (1) sich erstreckenden Lichtaustrittsschlitz (21) aufweist.

13. Vorrichtung nach einem der vorhergehenden Ansprüche 9 bis 11, **dadurch gekennzeichnet, daß** bei Verwendung eines durch eine Flüssigkeit aktivierbaren Leims die Leimaktivierungseinrichtung als Spritzaggregat mit wenigstens einer mit einer Flüssigkeit, vorzugsweise Wasser, beaufschlagbaren Spritzdüse (23) ausgebildet ist, die mit die Materialbahn mit Abstand überquerender Achse angeordnet ist und der eine deckend hierzu angeordnete, momentartig aktivierbare, vorzugsweise als Elektromagnetanordnung ausgebildete Auslenkeinrichtung (25) zugeordnet ist.

14. Vorrichtung nach einem der vorhergehenden Ansprüche 9 bis 13, **dadurch gekennzeichnet, daß** die Leimauftragseinrichtung mehrere, quer zur Bahnlaufrichtung nebeneinander angeordnete, geringen Bahnabstand aufweisende Spritzdüsen (10) aufweist, die mit Leim beaufschlagbar und vorzugsweise mittels einer Unterbrechungseinrichtung auf- und absteuerbar sind.

15. Vorrichtung nach einem der vorhergehenden Ansprüche 9 bis 14, **dadurch gekennzeichnet, daß** die Leimaktivierungseinrichtung (19) und vorzugsweise auch die Leimauftragseinrichtung (9 bzw. 15) im Takt des Formats der herzustellenden Falzprodukte auf- und absteuerbar ist bzw. sind.

## Claims

1. A method of joining at least two webs (1 and 2) of material run together while moving, and more particularly webs of paper moving into a folder, along spaced join lines (6) extending transversely in relation to the direction of movement of the web, said lines being constituted by adhesive applied to at least one of the webs of material, characterized in that an adhesive is employed, which in the applied condition is able to be converted from a passive, non-adhesive form into an active, tacky form and in that each web (1) of material receiving an application of adhesive firstly has applied to it, at least in receiving areas (12a) containing the join lines (6), the adhesive, which is then activated only along the join lines (6), before the webs (1 and 2) of material are moved together.

2. The method as claimed in claim 1, characterized in that an adhesive is employed which in the condition ready for application is passive and non-tacky, and which is able to be activated later.

3. The method as claimed in claim 2, characterized in that in the case of drying and/or cooling of the web (1) of material the adhesive is applied after such drying and/or cooling and is activated directly afterwards.

4. The method as claimed in claim 1, characterized in that an adhesive is utilized which is active in the condition ready for application and which after application is passivated and after passivation has been performed is activated again.

5. The method as claimed in claim 4, characterized in that an adhesive is employed which is able to be passivated by drying and which is applied prior to entry of the associated web (1) of material into a drier (18) and after emergence of the web (1) of material from the drier (18) is partly activated again.

6. The method as claimed in any one of the preceding claims, characterized in that an adhesive is employed which is able to be activated by the supply of energy thereto and preferably by light and which is preferably activated by a light ray, preferably in the form of a laser ray, coming out of a slot (21) extending over the web (1) of material.

7. The method as claimed in any one of the claims 1 through 5, characterized in that an adhesive is employed, which is able to be activated by a liquid and which is activated by means of a polarized liquid jet running across the web (1) of material with a clearance and which is preferably deflected by electromagnetic means.

8. The method as claimed in any one of the preceding claims, characterized in that the adhesive is applied in the form of linear stripes (12), which are spaced from one another laterally and extend in the direction of the web and preferably by the action of concentrated jets, and in that the adhesive is respectively activated along a join line (6) which extends transversely in relation to the direction of web motion and intersects the adhesive stripes (12) extending in the direction of web motion.

9. The apparatus for performing the method as claimed in at least one of the preceding claims, comprising at least one adhesive application device (9 and, respectively, 14) traversing an associated web (1) of material and which is arranged in front of a device (8) for running webs together, characterized in that the adhesive application device (9 and 14) is followed by an adhesive activating device (19) which is arranged to traverse the web (1) of material, by means of which device (19) the web (1) of material may receive an activating substance along a receiving line (6) which extends transversely in relation to the direction of movement of the web and is narrow in comparison to the length of adhesive application as seen in the direction of movement of the web.

10. The apparatus as claimed in claim 9, characterized in that in the case of the use of an adhesive which is passive in the condition ready for application, the application device (9 and 14) and the adhesive activating device (19) which follows it and preferably is combined with it as a single assembly, are arranged in an area of web guiding means directly in front of the web combining device (8 and 27), on the side remote from the web guiding elements of the web combining device (8 and 27), in an overlapping manner.

11. The apparatus as claimed in claim 9, characterized in that in the case of the use of an adhesive which is active in the condition ready for application, the adhesive application device (9 and 14) is arranged in front of a passivating device, preferably in the form of a drier (18) through which the associated web (1) of material passes through, which is followed by an adhesive activating device (19) arranged athwart the web (1) of material.

12. The apparatus as claimed in any one of the claims 9 through 11, characterized in that in the case of the use of an adhesive able to be activated by light, the adhesive activating device (19) comprises a housing (20) which runs athwart the web (1) of material and contains a laser diode functioning as a flash means, which housing (20) on its side facing the web (1) of material has a light exit slot (21) extending over the breadth of the web (1) of material.

13. The apparatus as claimed in any one of the claims 9 through 11, characterized in that in the case of the use of an adhesive able to be activated by a liquid the adhesive activating device is designed in the form of a spraying means with at least one spraying nozzle (23) able to receive a liquid and preferably water, which nozzle (23) is arranged with an axis running athwart the web of material with a clearance and with which there is associated a deflection device (25) arranged in alignment therewith, able to be activated for a short period of time and designed in the form of an electromagnetic arrangement.

14. The apparatus as claimed in any one of the claims 9 through 13, characterized in that the adhesive application device comprises a plurality of spraying nozzles (10) arranged alongside each other transversely in relation to the direction of web motion and at a small distance from the web, which are able to be supplied with the adhesive and preferably are able to be connected and shut off by an interruption means.

15. The apparatus as claimed in any one of the claims 9 through 14, characterized in that the adhesive activating device (19) and preferably furthermore the adhesive application device (9 and, respectively, 15) are able to be connected and shut off in accordance with the format of the folded products to be produced.

## Revendications

1. Procédé de raccordement d'au moins deux bandes de matière (1, 2) guidées conjointement en cours de défilement, notamment de segments de bandes en papier pénétrant dans un appareil de pliage, le long de lignes de liaison (6) mutuellement espacées, qui s'étendent transversalement par rapport au sens du défilement des bandes, et sont formées par de la colle déposée sur au moins l'une des bandes de matière, caractérisé par le fait qu'on utilise une colle pouvant passer, à l'état déposé, d'une forme passive non adhérente à une forme active adhérente ; et par le fait que chaque bande de matière (1) recevant un dépôt de colle est tout d'abord sollicitée, au moins dans la région de zones de dépôt (12a) incluant les lignes de liaison (6), par une colle qui n'est ensuite rendue active que le long des lignes de liaison (6) avant que les bandes de matière (1, 2) soient guidées conjointement.

2. Procédé selon la revendication 1, caractérisé par le fait qu'on utilise une colle passive et non adhérente à l'état apte au dépôt, qui peut être rendue active après coup.

3. Procédé selon la revendication 2, caractérisé par le fait que, dans le cas d'un séchage et/ou d'un refroidissement de la bande de matière (1), la colle est déposée après le séchage et/ou le refroidissement et est rendue active dans l'enchaînement direct.

4. Procédé selon la revendication 1, caractérisé par le fait qu'on utilise une colle active à l'état apte au dépôt, qui est rendue passive après le dépôt et est de nouveau rendue active après avoir été rendue passive.

5. Procédé selon la revendication 4, caractérisé par le fait qu'on utilise une colle pouvant être rendue passive par séchage, qui est déposée avant l'arrivée de la bande de matière associée (1) dans un sécheur (18), et est de nouveau rendue partiellement active après que la bande de matière (1) est sortie du sécheur (18).

6. Procédé selon l'une des revendications précédentes, caractérisé par le fait qu'on utilise une colle qui peut être rendue active par apport d'énergie, de préférence sous l'effet de la lumière, et est de préférence rendue active par un rayonnement lumineux revêtant préférentiellement la forme d'un rayonnement laser, qui sort par une fente (21) s'étendant au-dessus de la bande de matière (1).

7. Procédé selon l'une des revendications précédentes 1 à 5, caractérisé par le fait qu'on utilise une colle qui peut être rendue active par un fluide et est rendue active au moyen d'un jet de fluide préférentiellement polarisé, couvrant transversalement à distance la bande de matière (1) et dévié, de préférence par voie électromagnétique, en direction de la bande de matière (1).

8. Procédé selon l'une des revendications précédentes, caractérisé par le fait que la colle est déposée sous la forme de raies de colle (12) configurées en des traits, mutuellement distantes dans le sens latéral et s'étendant dans le sens du défilement des bandes, et est de préférence pulvérisée sous la forme de jets regroupés en faisceaux ; et par le fait que la colle est rendue respectivement active le long d'une ligne de liaison (6) qui s'étend transversalement par rapport au sens du défilement des bandes, et coupe les raies de colle (12) s'étendant dans le sens du défilement des bandes.

9. Appareil pour la mise en oeuvre du procédé selon au moins l'une des revendications précédentes, comportant au moins un dispositif (9, respectivement 14) de dépôt de la colle, qui est agencé de manière à couvrir transversalement une bande de matière associée (1), et est installé en amont d'un dispositif (8) de guidage conjoint des bandes, caractérisé par le fait que le dispositif (9, 14) de dépôt de la colle est suivi d'un dispositif (19) d'activation de la colle, qui est agencé de manière à couvrir transversalement la bande de matière (1), et au moyen duquel la bande de matière (1) peut être sollicitée par un agent d'activation le long d'une ligne de sollicitation (6) qui s'étend transversalement par rapport au sens de défilement des bandes, et est étroite comparativement à la longueur du dépôt de colle, considérée dans le sens du défilement des bandes.

10. Appareil selon la revendication 9, caractérisé par le fait que, lorsqu'on utilise une colle passive à l'état apte au dépôt, le dispositif de dépôt (9, 14) et le dispositif (19) d'activation de la colle, installé en aval de ce dernier avec lequel il est de préférence regroupé en un ensemble structurel unitaire, sont agencés, dans la zone du système de guidage des bandes qui est située directement en amont du dispositif (8, 27) de guidage conjoint des bandes, de manière à coiffer la bande (1) du côté tourné à l'opposé des éléments de guidage des bandes du dispositif (8, 27) de guidage conjoint des bandes.

11. Appareil selon la revendication 9, caractérisé par le fait que, lorsqu'on utilise une colle active à l'état apte au dépôt, le dispositif (9, 14) de dépôt de la colle est installé en amont d'un dispositif de passivation, de préférence un sécheur (18) parcouru par la bande de matière associée (1), et en aval duquel est installé un dispositif (19) d'activation de la colle, agencé de manière à couvrir transversalement la bande de matière (1).

12. Appareil selon l'une des revendications précédentes 9 à 11, caractérisé par le fait que, lorsqu'on utilise une colle pouvant être rendue active sous l'effet de la lumière, le dispositif (19) d'activation de la colle présente un boîtier (20) qui renferme une source lumineuse (22) revêtant la forme d'une diode laser agissant comme un dispositif à fulgurations, est agencé de manière à couvrir transversalement la bande de matière (1) et comporte, dans la région de son côté tourné vers la bande de matière (1), une fente (21) de sortie de lumière s'étendant sur la largeur de la bande de matière (1).

13. Appareil selon l'une des revendications précédentes 9 à 11, caractérisé par le fait que, lorsqu'on utilise une colle pouvant être rendue active par un fluide, le dispositif d'activation de la colle est réalisé sous la forme d'un groupe de pulvérisation muni d'au moins une buse pulvérisatrice (23) qui peut être sollicitée par un fluide, de préférence de l'eau, dont l'axe est agencé de manière à couvrir transversalement à distance la bande de matière, et à laquelle est associé un dispositif de déviation (25) situé dans l'alignement, activable par intermittence et conçu, de préférence, en tant qu'ensemble électromagnétique.

14. Appareil selon l'une des revendications précédentes 9 à 13, caractérisé par le fait que le dispositif de dépôt de la colle comprend plusieurs buses pulvérisatrices (10) qui sont juxtaposées transversalement par rapport au sens de défilement des bandes, sont espacées de la bande d'une faible distance, peuvent être sollicitées par de la colle et peuvent, de préférence, être mises en et hors fonction au moyen d'un dispositif d'interruption.

15. Appareil selon l'une des revendications précédentes 9 à 14, caractérisé par le fait que le dispositif (19) d'activation de la colle, et de préférence également le dispositif (9, respectivement 15) de dépôt de la colle, peu(ven)t être mis en et hors fonction en synchronisme avec le format des articles repliés devant être fabriqués.
